# EUROPEAN PATENT APPLICATION

(11) **EP 1 452 964 A1**
(43) Date of publication of application: **01.09.2004**
(21) Application number: 03004174.3
(22) Date of filing: 26.02.2003
(51) Int. Cl.: G06F 9/46, G07F 7/10

(54) **A method and device for activating an application or an applet**

(71) Applicant: SIEMENS AKTIENGESELLSCHAFT, 80333 München (DE)
(72) Inventor: Schmidt, Andreas, 38114 Braunschweig (DE); Van Niekerk, Sabine, 38228 Salzgitter (DE)

(57) **Abstract**

A method for activating an application (231) or an applet (233) comprises the steps of i) receiving a message (M401); ii) in response to the receiving step, activating the application (231) or the applet (233) by generating an event message (M403); and iii) sending said event message to the application (231) or the applet (233) to be activated. The event message (M403) can be selected from a plurality of event messages depending on a class of the message (M401), and the selecting step is performed in an application trigger module (215) or in an applet trigger module (217). The message (M401) preferably a Multimedia Message, notification, delivery report, or a read-reply report message for a Multimedia Message.

## Description

### Field of the invention

In general, the invention relates to providing of services for mobile devices and activating of applications or applets in mobile devices, especially in such mobile devices which can be used as mobile terminals.

### Background of the invention

The evolution of mobile communications and consumer electronics has lead to huge leaps in the capabilities offered by different mobile devices, such as mobile terminals or mobile phones. Laptop computers, Personal Digital Assistants and mobile phones are converging, resulting in better usability of the devices and better availability of different services in the mobile devices.

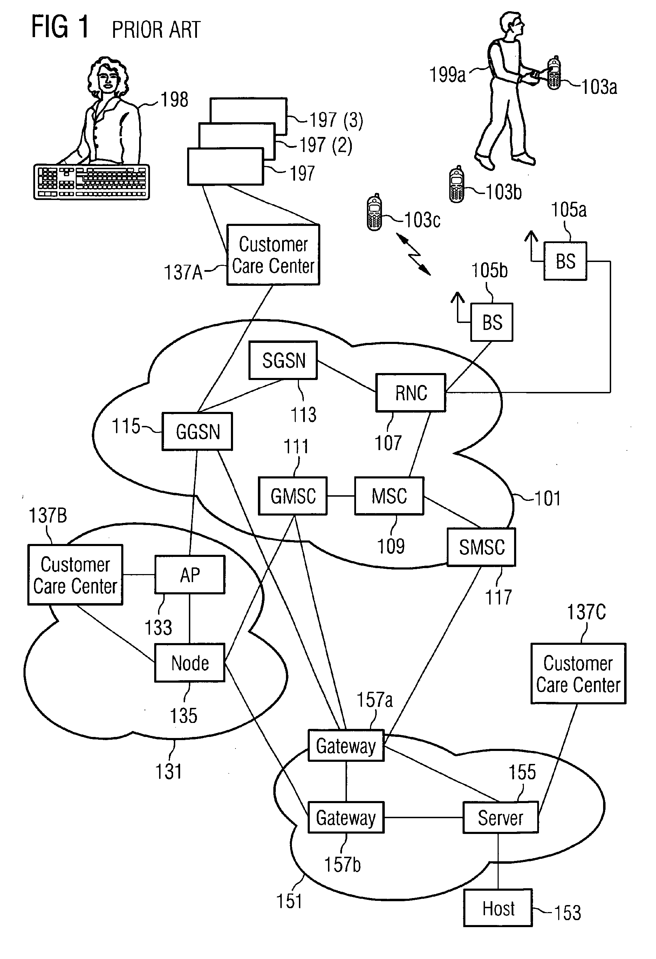

Figure 1 shows a system wherein applications and applets can be used. A plurality of mobile devices 103a, 103b, 103c are connected to a radio access network RAN of a mobile network 101 via Base Stations BS 105a, 106a defining cells and location areas. A mobile network 101 usually includes a large number of base stations 105, in order to control which there are one or more Radio Network Controllers RNC 107. The RNC 107 routes communication originating to/from user 199a of device 103a to a correct subsystem. For voice calls or for circuit switched data, such as defined for GSM networks, the RNC 107 routes the communication to Mobile Switching Center MSC 109. Short Message Service SMS messages are routed by the MSC 109 to a Short Message Service Center SMSC 117. Packet traffic in GPRS networks are transmitted to a Supporting GPRS Support Node SGSN 113.

Each of these elements, MSC 109, SMSC 117, and SGSN 113, can further route messages from/to user 199a. Therefore there are some gateway elements, namely for GSM there is a Gateway MSC 111 connected to node 135 of another communications network 131, or gateway 157a which is connected to the Internet 151. The SMSC can as well have a connection to gateway 157a. For GPRS, the gateway element is Gateway GPRS Support Node GGSN 115.

Typically, customer care center 137A includes a plurality of applications 197, 197(2), 197(3), and so forth. Further, there may be an operator 198 in the customer care center 137A. The customer care center 137A can help the user 199a with different subscription related issues, for example, turning on and off several supplementary services, like subscription restrictions. Further, if the user 199a has any problem, he or she can request help from the customer care center 137A. On the market there are some applications 197 where the subscriber can contact customer care center 137A by sending an SMS in order to inquire the sum of the current phone bill, whereas some other applications 197 route an incoming inquiry call to an operator 198 of the customer care center 137A. The customer care center 137a can also be implemented using an Intelligent Network approach, in which case the operational model would be a bit different.

Originally, the idea was to provide a customer care center 137A, 137B, 137C for each network. If a user 199a is originally from another mobile network 131, he or she shall call his own customer care center 137B, because most subscriber registers such as Home Location Register defining allowed services for the user are located in his home network. Of course, in the case that there is some error situation, the user 199a could also call the customer care center 137A of the network he is roaming under, because some data of the user is also located in the Visitor Location Register of the mobile network 101.

There may also be a customer care center 137C in the Internet 151. The customer care center 137C can be contacted from a host 153 through a server 155, or from mobile networks 101 or 131. The mobile network 101 is connected to the Internet via a gateway 157a which routes the messages to/from the customer care center 137C across the Internet 151. Typically this includes one or more hops over different servers 155. If user 199a is a GPRS subscriber, he or she can use the customer care center 137C by first contacting his own mobile network 131 through the visited mobile network 101. Then the visited mobile network 101 is in connection with another mobile network 131 via its access point 133. The access point 133 is further in connection with the Internet 151 through a node 135 and a gateway 157b.

In modern mobile communication systems, such as in Global System for Mobile communications GSM, General Packet Radio Service GPRS, and Universal Mobile Telecommunications System UMTS, operators have the possibility to develop operator-specific applications. These applications can make use of subscriber identity module SIM or user integrated circuit card UICC, and even a subscriber/user identity module application toolkit SAT functionality.

These operator-specific applications can be loaded as toolkit applications/applets into the SIM or UICC, and they are seen by the mobile terminal as being part of the SAT application.

International patent application WO 94/23394 discloses a first personal communicator which accepts off-line selection of an electronic greeting card from a user, and then transmits a request message corresponding to the off-line selection of the electronic greeting card, the request message including at least an electronic greeting card identifier and a destination identifier. The electronic mail server receives the request message and processes the request message by wirelessly transmitting an electronic greeting card message to the second personal communicator. The electronic greeting card includes a representation of an electronic greeting card image being identified by the electronic greeting card identifier. The second personal communicator is also identified by the destination identifier included with the request message.

US patent 6,370,389 B1 discloses on columns 6-10 the transmission of application related information by using a plurality of short messages SMS, where a specific identifier enables the receiving terminal to process the received message directly into an application as specified. The terminal can add an application identifier to the beginning of the information field of the short message to be transmitted first. As an example, the terminal can have a service application with information that can be important for a service purpose, such as the original serial number of the terminal, manufacturing month, repair month and month when modifications to the software have been done. The information in the service application can be sent in a user message from the terminal to for example the operator or a service station.

Another US patent 6,400,958 B1 discloses a mobile terminal supporting a plurality of applications. The terminal has means of communicating user messages wherein it comprises means for receiving user messages having data and a header relating to one of said applications and means for addressing the data to a respective application according to said header. Accordingly, the terminal may readily have a plurality of different applications on such can be arranged into the terminal at a later stage. One user message may contain data relating to one application indicated by the header, or a user message can contain data relating to several applications as indicated by different headers so that the header indicating a specific application is followed by the data relating to that specific application.

Some techniques and definitions for application programming for mobile devices have been defined in standards 1) 3GPP TS 42.019, Subscriber Identity Module Application Programming Interface (SIM API); Stage 1 (Release 5) and 2) 3GPP TS 43.019, Subscriber Identity Module Application Programming Interface (SIM API) for Java Card; Stage 2 (Release 5) which are incorporated as references herein.

One problem of state-of-the-art solutions as described in the references cited above is that the applications these enable have several restrictions, and as a result of this the applications must be very simple and cannot provide a user with a comfortable service including some user condition.

It is an object of the invention to bring about a solution by means of which it is possible to obtain a novel and elegant method and device for activating an application or an applet, and a method and device for providing services including the activation of an application or an applet.

This and other objectives of the invention can be achieved with a method and a system according to any one of the independent patent claims. Different embodiments are then presented in the dependent patent claims.

### Advantages of the invention

The present invention enables applications and applets, for example Smart Card Toolkit applications or applets, to be activated after reception of any kind of MMS related information, such as an MM, an MMS notification, MMS delivery report and MMS read-reply report.

The SAT provides operators and application programmers with an Application Programming Interface API which enables them to have access to the SIM or UICC functionality so that they can develop certain SIM or UICC based applications which can then be loaded as a toolkit applets into the SIM or UICC.

These toolkit applets are seen by the mobile terminal as being part of the SIM Toolkit application. They contain only the source code which is needed to run a certain application. To activate such a toolkit applet, there is an applet triggering module in the Toolkit framework. This applet triggering module receives an Application Protocol Data Unit APDU from the mobile network application in the mobile network framework and translates it into an event which activates the toolkit applet. The toolkit applet is not able to handle the APDU directly but handles high level messages, such as events, only.

The present invention provides methods for application and applet activation upon reception of any MMS related information, such as a multimedia message MM, a multimedia message service MMS notification, MMS delivery report, and MMS read-reply report. These applications or applets can reside on a smart card, such as on SIM, UICC, or Java Card, in the form of SAT applications or equivalent.

The advantage of this is that the toolkit application or toolkit applet activation after reception of MMS related information is independent of the particular mobile device (such as a mobile phone) which the user uses at a certain moment of time. The toolkit applet activation functionality is processed on the SIM or UICC, which can be plugged into a mobile device or an apparatus connectable with a terminal.

### Brief description of the drawings

In the following, the invention and its preferred embodiments are described more closely referring to the examples shown in Figures 2 to 5 in the appended drawings, wherein:
- Figure 1: illustrates a system wherein the present invention can be used;
- Figure 2: is a block diagram of a mobile device 102 adapted to carry out the present invention;
- Figure 3: shows a signalling diagram activating an application which involves reception of MMS information for customer care purposes without any user interaction;
- Figure 4: shows a signalling diagram showing how an toolkit applet or toolkit application is activated; and
- Figure 5: is a signalling diagram following an indication of a user that his or her mobile terminal has MMI problems.

Like reference signs refer to corresponding parts and elements throughout Figures 1-5.

### Detailed description of the invention

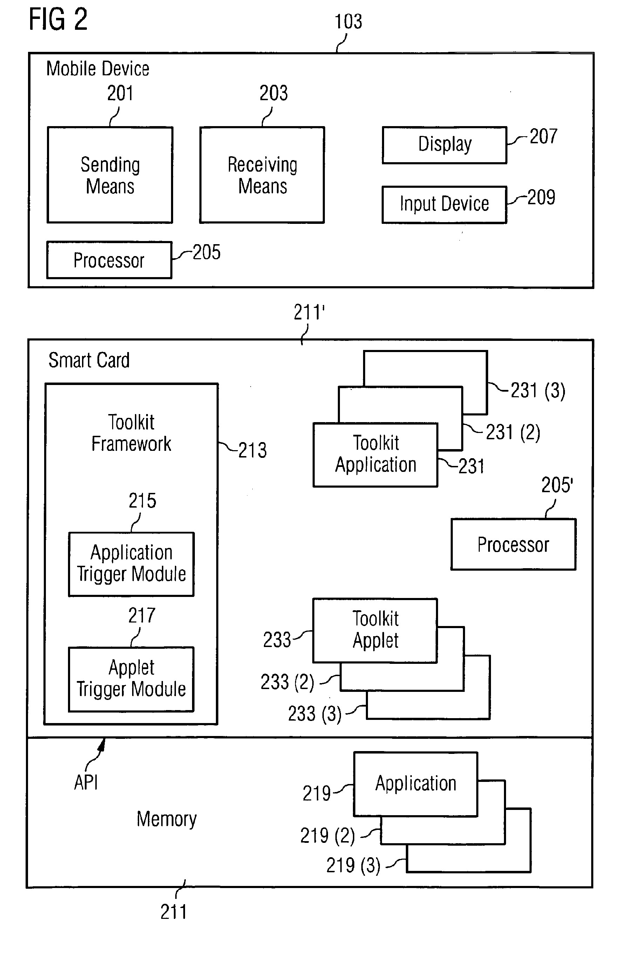

Figure 2 illustrates a schematic functional block diagram of a mobile device 103. The mobile device 103 includes sending means 201 and receiving means 203. The sending means 201 are for sending data to base stations 105a, 105b of a mobile network 101, and for sending data to other mobile devices. Therefore the sending means include radio frequency RF communication means, Infra-Red communication means, BLUETOOTH communication means, a data cable and so on. The receiving means 203 are means corresponding to the sending means 201 but used for receiving data.

Further, the mobile device 103 comprises processor 205, display 207 and input device 209. The processor 205 is a device which executes instructions given to it, such as a Central Processing Unit CPU which can be designed to run instructions defined in software. The display 207 is indended for visual communication between the user 199 and the mobile device 103. For example, when the user 199 dials a telephone number with a keyboard, or dictates a new calendar entry using the microphone and a speech recognition system incorporated in the mobile device 103, he is using an input device 209 for input purposes, but the display 207 is still preferably used for showing him or her a confirmation that the instructions, such as the telephone number dialled is correct.

The mobile device 103 comprises also a memory 211. The memory can be Random Access Memory RAM, Read-Only Memory ROM, or it can be implemented any smart card -like system, any storage drive, such as an electromagnetic disk drive, or any combination thereof. In the memory 211 there is a plurality of applications 219, 219(2), 219(3) and so forth. For example, different menu structures and actions triggered by selecting the menu structures are usually implemented using applications 219.

Further, the mobile device 103 includes at least one smart card 211'. Smart card has memory and a small processor 205'. Stored in the smart card 211' there is a toolkit framework 213 including application trigger module 215 and/or applet trigger module 217. The application trigger module 215 and applet trigger module 217 are used for activating toolkit application 231 or toolkit applet 233 upon reception of MMS related information, such as an MMS notification, MMS delivery report and MMS read-reply report. Therefore one or a plurality of toolkit applications 231, 231(2), 231(3), and/or toolkit applets 233, 233(2), 233(3) are stored into the memory of the smart card 211'.

At least a part of the memory of smart card 211', application trigger module 215, applet trigger module 217, toolkit applications 231, and toolkit applets 233 are accessible through an Application Programming Interface API. This can be interpreted as the memory of the smart card 211' were connected to the memory 211 of the mobile device 103 through the API.

According to one aspect of the present invention, the activation of toolkit application 231 or toolkit applet 233 is performed by generating a new event whenever some MMS related information, such as an MMS notification, MMS delivery report and MMS read-reply report is received.

According to one aspect of the present invention a single event can be used to launch multiple toolkit applications 231 or toolkit applets 233. In order to do this it is not any more necessary to include different parts for each applications 231, 233 in the MMS related information received, but the event caused by the MMS related information received can be used as such for launching two or more toolkit applications 231 or toolkit applets 233. In this manner, the services provided can be constructed more complex, thus providing more features and enhanced capacibilites.

The toolkit applications 231 or applets 233 can be used for the purposes of customer care, technical support, and maintenance.

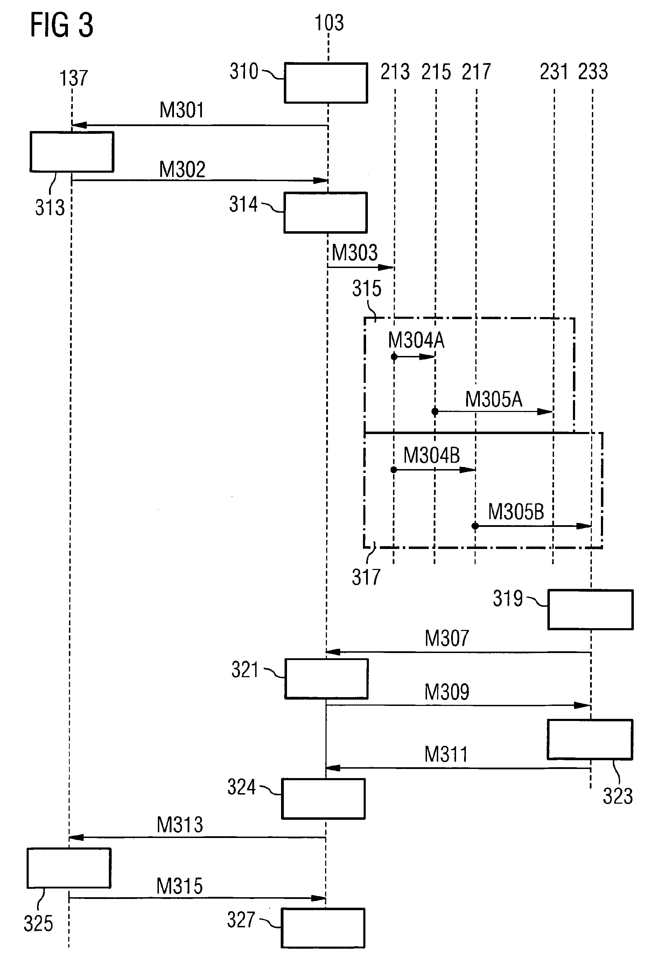

Figure 3 shows one example of the present invention applied to reception of MMS information for customer care purposes without any user interaction. In this example, toolkit applications 231 and toolkit applets 233 are toolkit-specific and are stored on a smart card.

The memory 211 includes of at least a toolkit application 231 or toolkit applet 233 dedicated to customer care purposes. A certain toolkit application 231 or toolkit applet 233 is used whenever there is any technical problem with mobile device 103, such as Man-to-Machine Interface MMI problems.

There are two possibilities these MMI problems can be recognized and handled. The first possibility is that the mobile terminal itself recognizes that it has MMI problems and that the mobile terminal will handle this problems without any user interaction. This is shown in figure 3.

When the mobile terminal recognizes that it has an MMI problem, it generates in step 310 a problem message and contacts the customer care center 137 to report its MMI problem to the customer care center by sending a Multimedia Message in message M301. In step 313 the customer care center 137 examines the message M301 and sends back a Multimedia Message in message M302 including a request for a scan of the current settings of the mobile device 103. Depending on the purpose of use, message M302 can also a notification message, delivery report or a read-reply report message, especially for the Multimedia Message in message M301.

The mobile device 103 uses SAT for downloading and handling the envelope of the message M302 in step 314 before passing at least some part of message M302 to toolkit framework 213 by sending message M303.

After reception of the message M303, an application trigger module 215 of the toolkit framework 213 activates in step 315 the toolkit application 231, respectively. This is done so that the toolkit framework 213 first passes message M304A to application trigger module 215 which sends message M305A to corresponding toolkit application 231.

Alternatively, as shown in step 317, the toolkit framework 213 may first pass message M304B to applet trigger module 217 which sends message M305B to corresponding toolkit applet 233 or an applet trigger module 217.

In other words, in step 315 event message M305A is generated, or, in step 317, respectively, event message M305B. The event message M305A, M305B can be selected from a plurality of event messages depending on a class of the message M303. Some possible classifications are described below with reference to Table 1. Then the selecting step is preferably performed in an application trigger module (215) or in an applet trigger module (217).

The activated toolkit application 231 or toolkit applet 233 as in Figure 3 is responsible for in step 319 to perform the operation defined in the request message M305A or M305B, respectively, or an operation defined as default for the toolkit application 231 or toolkit applet 233.

In step 319 the toolkit applet 233 is run. Similar handling would take place for the toolkit application 231, but this is now omitted for the sake of clarity. The toolkit applet 233 sends a request message M307 for scanning the current settings of the mobile device 103. The mobile device 103, more precisely, the processor 205 reads settings of different registers, such as those of the display 207 and input device 209, and returns the current settings in message M309.

In response to the receiving of message M309, the toolkit applet 233 generates in step 323 message M311 which is a SAT command SEND MM including at least some of the scan results from message M309 and the address of the customer care center 137. Then the toolkit applet 233 passes said message M311 to the mobile device 103 which in step generates message M313 which is a Multimedia Message, and sends it to the customer care center 137 in message M313.

The customer care center 137 analyses in step 325 the message M313 and checks what kind of MMI problem there may be. Preferably, the customer care center 137 includes a customer care center application 197 which includes a device-specific fault situation table comprising error messages (message M313) already encountered and cure (message M315) for the error condition. So in step 325 there may be a table-lookup, responsive to message M313, for selecting a predefined template for message M315, and if the search result shows that there is no predefined template available for message M313, the operator 198 is notified. He or she then solves the problem at hand and generates a template for message M315 and stores it into database to be in future available for customer care center application 197. It is clear that message M313 does not need in its entirety be used for the look-up but only predefined fields or parameter values can be used.

Responsive to the generation step 325, a correction message M315 is sent to the mobile device 103 which in step 327 corrects its settings as instructed by message M315.

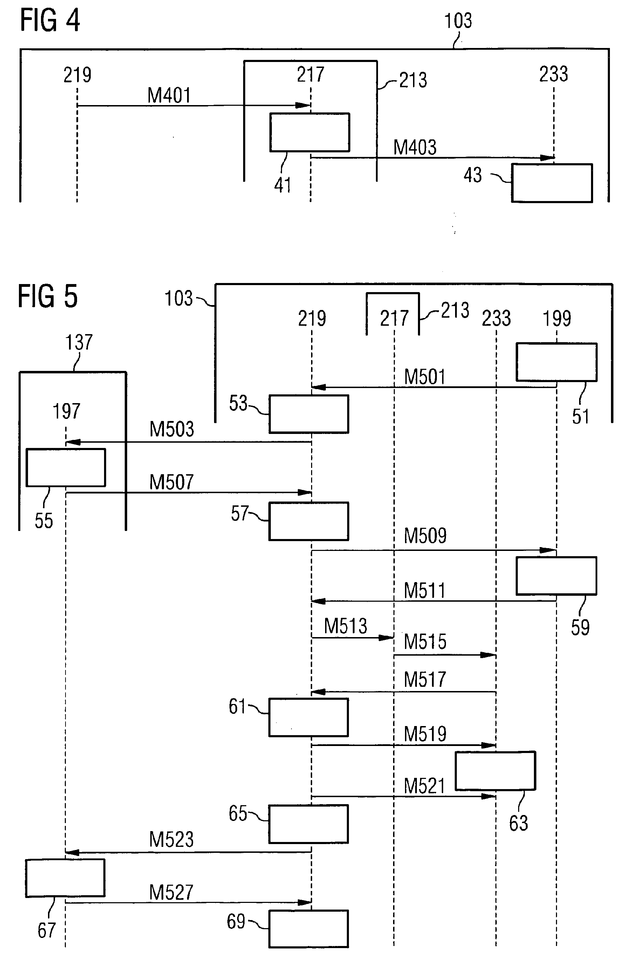

Figure 4 shows one further aspect of the present invention. The message M401 is firstly downloaded from the mobile device application 219 to the toolkit framework 213 by using SAT download envelope mechanisms, such as the DOWNLOAD MM command. This is the case when the MMS is used as a bearer for SAT.

The applet triggering module 217 in the toolkit framework 213 receives the message M401 which corresponds Application Protocol Data Unit APDU "DOWNLOAD MM" from application 219. The applet triggering module 217 translates in step 41 the message M401 "DOWNLOAD MM" APDU into an event EVENT_MM_ENV and send this event as message M403 to a predefined toolkit applet 233. In response to receiving the message M403, the toolkit applet 233 is activated. After activation, in step 43 the processor 205' of the smart card 211' executes the instructions contained in the applet 233.

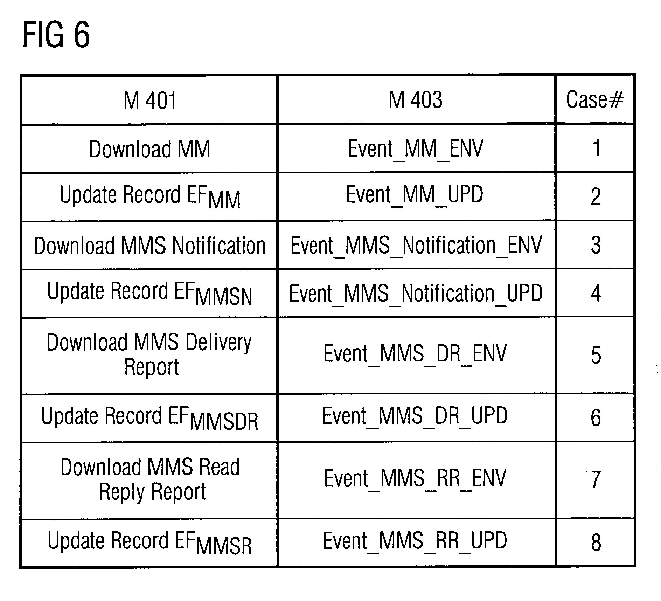

Figure 5 shows another aspect of the present invention. The user indicates that his or her mobile terminal has MMI problems and contacts the customer care center so this approach involves some user interaction.

When the user 199 in step 51 recognizes that his mobile device 103 has any MMI problems, he or she contacts the customer care center 197 to report his MMI problems to the customer care center by passing data for a multimedia message to application 219 in message M501. The application generates in step 53 the MM and sends it in message M503 to application 197 of the customer care center 137.

The application 197 or an operator 198 monitoring the application 197 reads in step 55 information included in message M503 and sends back message M507 which is an MM. Message M507 includes a request for a scan of the current settings of the mobile device 103. The message M507 contains at least one information element, such as a flag or keyword, defining the class of the message M507. The information element can be set a predefined value when the received MM is used for customer care purposes.

When this information element is set, the mobile device 103 in response to receiving the message M507 detects in step 57 that it may not store the message M507 directly into the memory of the smart card 211' as normally, but that it has to be forwarded to the user 199 in message M509 in order to inform him or her about the planned settings scan.

In step 59 the user 199 may decide to continue or cancel the scan of the settings of the mobile device 103. If the user is willing to solve the MMI problems, he or she chooses in step 59 to continue by sending a positive acknowledgement message in step M511. The MM included in message M507 is stored into the smart card 211'.

In response to storing message M507 into the memory of smart card 211' in message M513, the applet triggering module 217 of the toolkit framework 213 stored in the smart card 211' activates by sending message M515 the toolkit applet 233 responsible for scanning the current settings of the mobile device 103.

The event message M515 is generated preferably in the applet trigger module 217, or the application trigger module 215, depending whether it is an application 231 or applet 233 to be activated. After generating the event message M515 it is sent to the the application 231 or the applet 233 to be activated, like discussed above.

Further, the event message M515 can be selected from a plurality of event messages depending on a class of the message M513.

In response to receiving message M515, the toolkit applet 233 responsible for scanning the current settings of the mobile device 103 is activated. It sends a request message M517 for a scan of the current settings to the mobile device 103. The mobile device scans in step 61 the current settings and sends them in mesasage M519 back to the toolkit applet 233.

In step 63 the toolkit applet generates a SAT command "SEND MM" including the scan results of message M519 and the address of the customer care center 137 or a customer care center application 197. The toolkit applet 233 send message M521 generated in step 63 to the mobile device 103. In response to at least a part of the contents in message M521 the mobile device 103 generates in step 65 a multimedia message with the scan results of message M521 and sends this in message M523 to a customer care center application 197.

The customer care center application 197 analyses in step 67 the message M523, checks what kind of MMI problem there might be and generates a correction message M527. The mobile device 103 is adapted to execute in step 69 the correction message M527, or the approach above discussed can also be used for automatically tuning up the man-machine interface. Further, the customer care center application 197 can be automatised as already discussed.

Table 1 shows some further aspects of the present invention. In the following, its contents relating to cases #2 to #4 are shortly explained; case #1 where message M401 corresponded "DOWNLOAD MM" APDU and where it in step 41 triggered the generating of event message M403 EVENT_MM_ENV has already been discussed above.

In case #2 message M401 is received via UPDATE RECORD EF_{MM} instruction which stores the MM of message M401 into the EF_{MM} on the SMART CARD 211'. The applet triggering module 217 in the toolkit framework 213 receives the message M401 APDU for the UPDATE RECORD EF_{MM} instruction from the GSM application 219 in the GSM/UMTS framework. In step 41 the applet triggering module 217 translates the APDU for the UPDATE RECORD EF_{MM} instruction into message M403 corresponding an event EVENT_MM_UPD. Then the message M403 is sent to a predefined toolkit applet 233. The toolkit applet is activated in response to receiving the message M403.

In a similar way as for toolkit application/applet activation after reception of an MM, a toolkit application/applet can be activated after reception of an MMS notification, an MMS delivery report or an MMS read reply report.

There are two possibilities how the message M401 which is an MMS notification can be received by the smart card 211'. These are illustrated as cases #3 and #4 shown in Table 1.

In case #3 the first possibility is that MMS is used as a bearer for SAT and the MMS notification has been downloaded from the mobile device 103 to the smart card 211' by using SAT download/envelope mechanisms, e.g. with the DOWNLOAD MMS NOTIFICATION command.

The application/applet triggering module in the toolkit framework 213 receives in message M401 the APDU "DOWNLOAD MMS NOTIFICATION" from a GSM application 219 in the GSM framework. The application/applet triggering module then translates this "DOWNLOAD MMS NOTIFICATION" APDU into the event EVENT_MMS_NOTIFICATION_ENV and sends this event in even message M403 to a predefined toolkit applet 233.

The toolkit applet 233 is activated responsive to receiving of the message M403 in order to carry out predefined functionalities dedicated to be performed in step 43.

In case #4 the second possibility for the smart card 211' to receive an MMS notification is via the UPDATE RECORD EF_{MMSN} instruction as message M401. In response to receiving such a message, the smart card 211' stores the newly received MMS notification in the EF_{MMSN} on the smart card 211'. The applet triggering module 217 in the toolkit framework 213 receives the APDU for the UPDATE RECORD EF_{MMSN} instruction from the GSM application 219 in the GSM framework. The applet triggering module 217 translates in step 41 the APDU for the UPDATE RECORD EF_{MMSN} instruction into the event message M403 EVENT_MMS_NOTIFICATION_UPD and sends this event to a predefined toolkit applet 233. The toolkit applet 233 is activated in response to receiving of the message M403, and in step 43 it carries out certain functionalities dedicated to the reception of the message M403.

In cases #5 and #6 toolkit applet 233 is activated in response to receiving an MMS delivery report as message M401.

In case #5, the MMS delivery report is downloaded from the mobile device 103 to the smart card 211' by using SAT download/envelope mechanisms, e.g. with the DOWNLOAD MMS delivery report command. This is the case when MMS is used as a bearer for SAT. The applet triggering module 217 in the toolkit framework 213 receives the APDU "DOWNLOAD MMS delivery report" from a GSM application in the GSM framework. The applet triggering module 217 translates in step 41 the "DOWNLOAD MMS delivery report" APDU into the event EVENT_MMS_DR_ENV and sends this event message M403 to a predefined toolkit applet 233. The toolkit applet 233 is activated responsive to the receiving of the event message M403 in order in step 43 to carry out certain functionalities dedicated to the reception of an MMS delivery report.

In case #6 the MMS delivery report is to be stored on the smart card 211'. The smart card 211' receives the MMS delivery report via the UPDATE RECORD EF_{MMSDR} instruction, which stores the MMS delivery report in the EF_{MMSDR} on the smart card 211'. The application/applet triggering module in the toolkit framework receives the APDU for the UPDATE RECORD EF_{MMSDR} instruction from the GSM/UMTS application in the GSM/UMTS framework (see figure 8). The application/applet triggering module will translate the APDU for the UPDATE RECORD EF_{MMDSR} instruction into the event EVENT_MMS_DR_UPD and send this event to a certain toolkit application/applet. The toolkit application/applet will be activated after reception of the event EVENT_MMS_DR_UPD in order to carry out certain functionalities dedicated to the reception of an MMS delivery report.

In cases #7 and #8 the toolkit applet 233 is activated in response to receiving of an MMS read reply report as message M401.

In case #7 the MMS read reply report is downloaded from the mobile device 103 to the smart card 211' by using SAT download/envelope mechanisms, e.g. with the DOWNLOAD MMS READ-REPLY REPORT command. This is the case when MMS is used as bearer for SAT.

The applet triggering module 217 in the toolkit framework 213 receives the APDU "DOWNLOAD MMS READ REPLY REPORT" from a GSM application 219 in the GSM framework. The applet triggering module 217 translates in step 41 the "DOWNLOAD MM READ REPLY REPORT" APDU into the event message M403 EVENT_MMS_RR_ENV and sends message M403 to a predefined toolkit applet 233. In response to receiving the message M403 the toolkit applet 233 is activated in order in step 43 to carry out certain functionalities dedicated to the reception of an MMS read-reply report.

In case #8 the MMS read reply report is to be stored on the smart card 211'. The smart card 211' receives the MM via the UPDATE RECORD EF_{MMSRR} instruction. In response to receiving the message the smart card 211' stores the MMS read reply report in the EF_{MMSRR} on the smart card 211'. The applet triggering module 217 in the toolkit framework 213 receives the message M401 including APDU for the UPDATE RECORD EF_{MMSRR} instruction from the GSM application 219 in the GSM/UMTS framework.

The applet triggering module 217 translates in step 41 the APDU for the UPDATE RECORD EF_{MMSRR} instruction into the event message M403 EVENT_MMS_RR_UPD and sends this event to a predefined toolkit applet 233. In response to receiving the message M403 the toolkit applet 233 is activated in order in step 43 to carry out certain functionalities dedicated to the reception of an MMS read reply report.

Even though in the above description the invention has been described using a GSM terminal as mobile device 103, wherein the application 219 is stored and run in GSM framework, the invention is to be understood also applicable for any type of mobile device 103, especially in a GPRS or UMTS terminal. Then the GSM framework is preferably substituted by corresponding framework, such as for a UMTS terminal the framework is preferably a UMTS framework.

The smart card 211' can be the SIM or any other kind of a suitable smart card, such as UIM, WIM, or any Universal Integrated Circuit Card. Then the nomenclature of SAT were changed to USAT corresponding USIM Application Toolkit, for example. This is believed to be evident for a person skilled in the art.

Further, in the description the applet trigger module 217 can be understood to be exchangeable by application trigger module 215, or both functionalities can be performed in one program block 215+217. Same applies to toolkit applications 231 and toolkit applets 233.

Even though some embodiments have been presented as separate examples, it is to be understood that a working solution can be a combination of some or all features shown in different embodiments as well. Especially, toolkit applet 233 can be replaced with toolkit application 231, and vice versa.

Although the invention was described above with reference to the examples shown in the appended drawings, it is obvious that the invention is not limited to these but may be modified by those skilled in the art without difference from the scope and the spirit of the invention.

### List of used references:

- **101**: mobile network
- **103**: mobile device
- **105**: base station
- **107**: radio network controller
- **109**: mobile switching center
- **111**: gateway mobile switching center
- **113**: supporting GPRS support node
- **115**: gateway GPRS support node
- **117**: short message center
- **131**: another mobile network
- **133**: access point
- **135**: node
- **137**: customer care center
- **151**: the Internet
- **153**: host
- **155**: server
- **157**: gateway
- **197**: application
- **198**: customer care center operator
- **199**: user
- **201**: sending means
- **203**: receiving means
- **205**: processor
- **205'**: processor
- **207**: display
- **209**: input device
- **211**: memory
- **211'**: smart card
- **213**: toolkit framework
- **215**: application trigger module
- **217**: applet trigger module
- **219**: application
- **231**: toolkit application
- **233**: toolkit applet

## Claims

1. A method for activating an application (231) or an applet (233),
**comprising**
the steps of:
- receiving a message (M401);
- in response to the receiving step, activating the application (231) or the applet (233) by generating an event message (M403); and
- sending said event message to the application (231) or the applet (233) to be activated.

2. A method according to claim 1,
**wherein:**
the event message (M403) is selected from a plurality of event messages depending on a class of the message (M401).

3. A method according to claim 2,
**wherein:**
the selecting step is performed in an application trigger module (215) or in an applet trigger module (217).

4. A method according to claim 1, 2, or 3,
**wherein:**
the message (M401) is a Multimedia Message, notification, delivery report, or a read-reply report message for a Multimedia Message.

5. A method according to claim 1, 2, or 3,
**wherein:**
the message (M401) is a notification message, delivery report or a read-reply report for a previous message (M301, M503).

6. A method according to any one of the preceding claims,
**wherein:**
the application (231) or the applet (233) is activated in a mobile device (103).

7. A method according to any one of the preceding claims,
**wherein:**
the application (231) or the applet (233) is used for customer care, technical support, or maintenance purposes.

8. A method according to claim 7,
**wherein:**
the message (M401) has been generated in a customer care center (137).

9. A method for providing a service including the activation of an application (231) or an applet (233) especially according to any one of the preceding claims, the method **comprising**
the step of:
- sending an activation request (M302, M507) to a mobile device (103) wherein the application (231) or the applet (233) is to be activated.

10. A method according to claim 9,
**wherein:**
the activation request (M302, M507) is sent responsively to a situation information message (M301, M503),
especially describing a problem relating to Man-Machine-Interface of said mobile device (103).

11. A method according to claim 9 or 10,
**wherein:**
the situation information message (M301) is sent without user interaction.

12. A method according to claim 11,
**wherein:**
the situation information message (M301) is sent responsively to the mobile device (103) detecting a problem situation (step 310).

13. A method according to claim 9 or 10,
**wherein:**
the situation information message (M507) is sent after the user of the device (103) performing (step 51) an operation.

14. A method according to any one of claims 10 to 13,
**wherein:**
the situation information message (M301, M507) is sent as a Multimedia Message.

15. A method according to claim 14,
**wherein:**
the activation request (M302, M507) is sent as a notification message, delivery report or a read-reply report for the situation information message (M301, M507) .

16. A device (103)
**comprising:**
- receiving means (203) adapted to receive a message (M401);
- generation means (213, 215, 217) responsive to the receiving means (203) adapted to generate an event message (M403) to the application (231) or the applet (233) to be activated; and
- sending means (213, 215, 217) for sending said event message (M403) to the application (231) or the applet (233) to be activated.

17. A device according to claim 16,
**wherein:**
the generation means (213, 215, 217) are adapted to select the event message (M403) from a plurality of event messages depending on a class of the message (M401).

18. A method according to claim 17,
**wherein:**
the generation means (213, 215, 217) are arranged into a smart card (211').

19. A method according to the claim 16, 17, or 18,
**wherein:**
the message (M401) is a Multimedia Message, notification, delivery report, or a read-reply report message for a Multimedia Message.

20. A device (137) for providing a service including the activation of a service, the device (137)
**comprising:**
- sending means (197) responsive to receiving means (197) adapted to send a message (M401, M302, M507) to a mobile device (103) in response to receiving a situation information message (M301, M503) for activating an application (231) or an applet (233) stored in said mobile device (103).

21. A method according to the claim 20,
**wherein:**
the message (M401, M302, M507) is a Multimedia Message, notification, delivery report, or a read-reply report message for a Multimedia Message.

22. A system for providing a service including the activation of an application (231) or an applet (233)
**characterized in that**:
the system includes:
- (i) a mobile device (103) according to claim 16 or 17, and a device (137) for providing a service including the activation of a service; or
- (ii) first means for carrying out the method according to any one of the claims 1 to 8 and second means for carrying out the method according to any one of the claims 9 to 15.

23. Use of a smart card (211') for activating an application (231) or an applet (233) in response to a message (M401).

24. Use of smart card (211') according to claim 23,
**wherein:**
said application (231) or applet (233) is stored in said smart card (211').

25. Use of smart card (211') according to claim 23 or 24,
**wherein:**
the message (M401) is a Multimedia Message, notification, delivery report, or a read-reply report message for a Multimedia Message.
